(19) Europäisches Patentamt
European Patent Office
Office européen des brevets

(11) Veröffentlichungsnummer: **0 036 969**
**B1**

(12) # EUROPÄISCHE PATENTSCHRIFT

(45) Veröffentlichungstag der Patentschrift: **13.04.83**

(51) Int. Cl.³: **C 08 F 20/14**, C 08 F 2/38

(21) Anmeldenummer: **81101624.5**

(22) Anmeldetag: **06.03.81**

(54) **Verfahren zur Herstellung von Methacrylsäuremethylester-Homo- oder -Copolymerisaten.**

(30) Priorität: **18.03.80 DE 3010373**

(43) Veröffentlichungstag der Anmeldung: **07.10.81 Patentblatt 81/40**

(45) Bekanntmachung des Hinweises auf die Patenterteilung: **13.04.83 Patentblatt 83/15**

(84) Benannte Vertragsstaaten: **DE FR GB IT**

(56) Entgegenhaltungen: **DE-A-2 837 026**

(73) Patentinhaber: **BAYER AG, Zentralbereich Patente, Marken und Lizenzen, D-5090 Leverkusen 1, Bayerwerk (DE)**

(72) Erfinder: **Podszun, Wolfgang, Dr., Wolfskaul 4, D-5000 Köln 80 (DE)**
Erfinder: **Süling, Carlhans, Dr., Carl-Leverkus-Strasse 10, D-5068 Odenthal (DE)**
Erfinder: **Alberts, Heinrich, Dr., Morgengraben 16, D-5000 Köln 80 (DE)**

**EP 0 036 969 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Verfahren zur Herstellung von Methacrylsäuremethylester-Homo- oder -Copolymerisaten

Die vorliegende Erfindung betrifft ein Verfahren zur Polymerisation von Methacrylsäuremethylester oder dessen Gemischen mit weiteren Vinylmonomeren in Gegenwart von Enolethern.

In der Technik übliche und bewährte Molekulargewichtsregler sind Alkylmercaptane. Daneben werden häufig auch schwefelfreie Reglersysteme, wie sie beispielsweise in Houben–Weyl, Methoden der Organischen Chemie, Georg Thieme Verlag, Stuttgart, 1961, Bd. XIV/1, S. 327 ff. aufgeführt sind, eingesetzt. Gegenüber Mercaptanreglern haben schwefelfreie Regler im allgemeinen den Vorteil, einen weniger störenden Geruch und eine verringerte Oxidierbarkeit aufzuweisen, im allgemeinen aber auch den Nachteil, eine wesentlich geringere Übertragungsaktivität aufzuweisen, so daß zur Erzielung vergleichbarer Molekulargewichte höhere Reglerkonzentrationen notwendig sind. Als Beispiele für spezielle ungesättigte Molekulargewichtsregler seien 1-Methylcyclohexen-1 (US-PS 3 265 677), Terpinolen (DE-AS 1 795 395) und α-Methylstyrol-Dimere (DE-PS 966 375), die bei der Polymerisation von Styrol und Acrylsäurederivaten eingesetzt wurden, aufgeführt.

Es wurde nun gefunden, daß schwefelfreie Enolether als Molekulargewichtsregler für die Polymerisation von Methacrylsäuremethylester eine mit Alkylmercaptanen vergleichbare Regleraktivität aufweisen, ohne aber die Nachteile der Mercaptane, wie Geruch oder Oxidierbarkeit, zu besitzen. Besonders geeignet sind ungesättigte cycloaliphatische Enolether als Molekulargewichtsregler.

Gegenstand der Erfindung ist ein Verfahren zur Polymerisation von Methacrylsäuremethylester oder deren Gemischen mit bis zu 25 Gew.-%, bezogen auf Gesamtmonomere, an mit Methacrylsäuremethylester copolymerisierbaren Vinylmonomeren, dadurch gekennzeichnet, daß die Polymerisation in Gegenwart von 0,01–10 Gew.-%, bezogen auf Gesamtmonomere, eines oder mehrerer Enolether, die sich von aliphatischen oder cycloaliphatischen Aldehyden oder Ketonen ableiten, durchgeführt wird.

Vorzugsweise werden 0,05–1 Gew.-% Enolether, bezogen auf Gesamtmonomere, eingesetzt.

Geeignete copolymerisierbare Vinylmonomere sind beispielsweise $C_2-C_{20}$-Alkylester, vorzugsweise $C_2-C_{15}$-Alkylester der Methacrylsäure, $C_1-C_{20}$-Alkylester, vorzugsweise $C_1-C_8$-Alkylester der Acrylsäure, Styrol, $C_1-C_4$-alkylsubstituierte Styrole wie α-Methylstyrol, Acrylnitril, Methacrylnitril oder deren Gemische.

Gegenstand der Erfindung sind weiter die nach dem erfindungsgemäßen Verfahren erhaltenen Produkte.

Wesentliche Vorteile der erfindungsgemäß verwendeten Enolether gegenüber den üblicherweise in der Technik verwendeten Alkylmercaptanen sind bei vergleichbarer Reglerwirkung die Geruchlosigkeit, die fehlende Oxidierbarkeit und ein zusätzlicher stabilisierender Einfluß auf die Polymeren bei thermischer Beanspruchung. Dieser stabilisierende Effekt kann durch Verwendung zusätzlicher synergistischer Antioxidans-Stabilisatorkombinationen, z. B. bei der thermoplastischen Verarbeitung der Polymerisate, noch verstärkt werden.

Die nach dem erfindungsgemäßen Verfahren hergestellten Polymeren weisen vorzugsweise Grenzviskositäten von $[\eta] = 0{,}8$ bis 2,8 dl/g auf, gemessen in Chloroform bei 25°C. Die Polymeren haben statischen Aufbau und besitzen Molgewichte von etwa 100 000 bis 1 000 000.

Für das erfindungsgemäße Verfahren sind Enolether geeignet, die sich einerseits von aliphatischen oder cycloaliphatischen Aldehyden oder Ketonen und andererseits von Alkyl-, Cycloalkyl- oder Aralkylalkoholen ableiten. Die cycloaliphatischen Aldehyde oder Ketone können im Ring substituiert oder überbrückt sein und/oder eine Doppelbindung enthalten. Beispielhaft seien Butyraldehyd, Valeraldehyd, Cyclohexylaldehyd, Cyclohexenylaldehyd, Bicyclo-[2.2.1]-hexenylaldehyd und Cyclohexanon genannt. Bevorzugt sind die cycloaliphatischen Aldehyde oder Ketone, die gegebenenfalls durch eine oder zwei $C_1-C_5$-Alkylgruppen, insbesondere durch Methylgruppen im Ring substituiert sind.

Geeignete Alkohole sind $C_1-C_{20}$-Alkanole, die gegebenenfalls verzweigt oder ungesättigt sein können, sowie $C_5-C_{10}$-Cycloalkanole und $C_7-C_{20}$-Aralkylalkohole, deren Cycloalkyl- bzw. Arylgruppe gegebenenfalls durch niedere Alkylreste substituiert sein können. Als Beispiele seien Methanol, Ethanol, n-Propanol, Isobutanol, 2-Ethylhexanol, Cyclohexanol und Benzylalkohol genannt.

Beispiele von Enolethern, die bei dem erfindungsgemäßen Verfahren eingesetzt werden können, sind in den folgenden Tabellen 1–5 aufgeführt.

Tabelle 1

Enolether

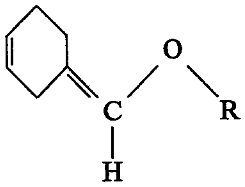

(1)

| R | Siedepunkt Torr/°C |
|---|---|
| $—CH_2—$ 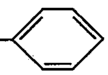 | 0,1/93 |
| $—CH_3$ | 25/89 |
| $—C_2H_5$ | 16/72 |
| $—n\text{-}C_3H_7$ | 11/86 |
| $—n\text{-}C_4H_9$ | 17/106–108 |
| $—iso\text{-}C_4H_9$ | 17/99–100 |
| $—n\text{-}C_5H_{11}$ | 14/116 |
| $—n\text{-}C_8H_{17}$ | 0,08/110 |
| —3,4,5-Trimethylhexyl | 0,15/93 |
| $—n\text{-}C_{10}—H_{21}$ | 0,12/111–112 |
| $—n\text{-}C_{12}H_{25}$ | 0,08/113 |
| $—C_{18}H_{37}$ | 0,05/195–200 |
| 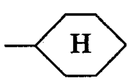 | 0,1/82 |

Tabelle 2

Enolether

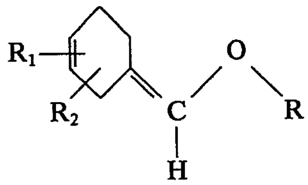

(2)

| $R_1$ | $R_2$ | R | Siedepunkt Torr/°C |
|---|---|---|---|
| $CH_3$ | H | $—CH_2—$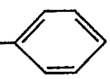 | 0,08/99 |
| $CH_3$ | H | $—n\text{-}C_4H_9$ | |
| $CH_3$ | H | $—n\text{-}C_6H_{13}$ | 29/130 |
| $CH_3$ | H | —2-Ethyl-hexyl | 0,07/84–85 |
| $CH_3$ | H | $—n\text{-}C_8H_{17}$ | 0,08/103 |
| $CH_3$ | H | $—n\text{-}C_9H_{19}$ | 0,06/90 |
| $CH_3$ | H | $—n\text{-}C_{10}H_{21}$ | 0,06/106–108 |
| $CH_3$ | H | $—n\text{-}C_{12}H_{25}$ | 0,07/136 |
| $CH_3$ | H | $—n\text{-}C_{14}H_{29}$ | 0,07/165 |
| $CH_3$ | H | $—n\text{-}C_{16}H_{33}$ | 0,075/173–175 |
| $CH_3$ | H | 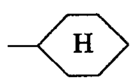 | 0,08/79 |
| $CH_3$ | $CH_3$ | $—CH_2—$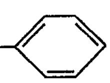 | 0,07/107 |
| $CH_3$ | $CH_3$ | $—C_6H_{13}$ | 0,08/99 |

Tabelle 3

Enolether

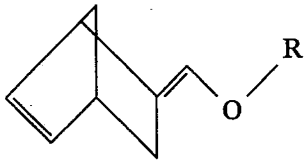

(3)

| R | Siedepunkt Torr/°C |
|---|---|
| —$CH_2$— 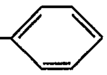 | 0,055/106 |
| 2-Ethylhexyl | 0,12/89–90 |
| —n-$C_{10}H_{21}$ | 0,05/114–116 |
| 3,4,5-Trimethylhexyl | 0,14/100 |

Tabelle 4

Enolether

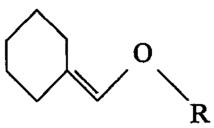

(4)

| R | Siedepunkt Torr/°C |
|---|---|
| —$CH_2$— 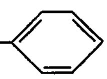 | 0,07/83 |
| 2-Ethylhexyl | 0,075/72–73 |

Tabelle 5

Enolether

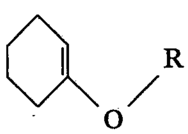

(5)

| R | Siedepunkt Torr/°C |
|---|---|
| —2-Ethyl-hexyl | 0,66/68–69 |
| —3,4,5-Trimethylhexyl | 0,22/82–83 |
| —$CH_2$— 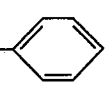 | 0,11/92–94 |

Vorzugsweise werden Enolether der Formel 6 eingesetzt

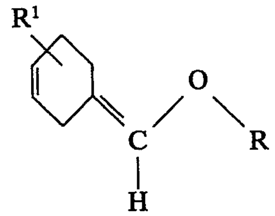

in der $R_1$ = H oder $CH_3$ und R = $C_1-C_{10}$-Alkyl, $C_5-C_{10}$-Cycloalkyl oder Benzyl ist.

Die Herstellung von Enolethern ist ausführlich in der Literatur beschrieben, zum Beispiel in Houben – Weyl, Methoden der Organischen Chemie, Band VI/3, S. 90, Georg Thieme Verlag, Stuttgart, 1965. Eine gute Methode ist die Synthese aus dem Aldehyd über das Acetal als Zwischenstufe, nach der alle Enolether zugänglich sind.

Die als Molekulargewichtsregler verwendeten Enolether werden in Mengen von 0,01 – 10 Gew.-%, vorzugsweise von 0,05 – 1 Gew.-%, bezogen auf die Summe der Monomeren, eingesetzt. Die Zugabe der Enolether während der Polymerisation kann zu jedem beliebigen Zeitpunkt erfolgen, vorzugsweise wird der als Regler verwendete Enolether zu Beginn der Polymerisation zugesetzt.

Die Durchführung des erfindungsgemäßen Polymerisationsverfahrens kann in homogener oder heterogener Phase erfolgen, das heißt in organischer Lösung oder Suspension, durch Emulsions- oder Suspensionspolymerisation in wäßriger Phase oder durch Polymerisation in der Masse, beispielsweise in der Schmelze.

Die Polymerisation in homogener oder heterogener Phase wird in Abhängigkeit vom gewählten Initiatorsystem bei Temperaturen von $-10°C$ bis $+300°C$, bevorzugt bei Temperaturen von $+60$ bis $+200°C$, durchgeführt. Dabei kann die Polymerisation bei Drücken von 50 bis 760 Torr, vorzugsweise von 400 bis 760 Torr, erfolgen oder bei Drücken von 1 bis 100 bar, vorzugsweise von 1 – 25 bar.

Die Polymerisation kann kontinuierlich oder diskontinuierlich durchgeführt werden.

Die Polymerisation kann in Gegenwart von Radikalauslösern, wie UV-Licht oder anderer energiereicher Strahlung, gegebenenfalls in Kombination mit Sensibilisatoren oder Radikalbildnern, wie Peroxiden, erfolgen. Vorzugsweise wird die Polymerisation durch Radikale liefernde Verbindungen initiiert.

Die Initiatoren werden in Mengen von 0,01 bis 3 Gew.-%, vorzugsweise 0,1 bis 1,5 Gew.-%, bezogen auf Gesamtmonomere, eingesetzt.

Als Polymerisationsinitiatoren können beispielsweise Perverbindungen oder Radikale liefernde Azoverbindungen verwendet werden. Beispielhaft seien genannt:

Aliphatische Azodicarbonsäurederivate wie Azobisisobuttersäurenitril oder Azodicarbonsäureester, Peroxide wie Lauroylperoxid, Succinylperoxid, Dibenzoylperoxid, p-Chlorbenzoylperoxid, 2,4-Dichlorbenzoylperoxid, Ketonperoxide wie Methylethylketonperoxid, Methylisobutylketonperoxid, Cyclohexanonperoxid, Acetylacetonperoxid, Alkylester von Persäuren wie tert.-Butylperpivalat, tert.-Butylperoctoat, tert.-Butylperbenzoat, tert.-Butylperisononanat, Mono-tert.-Butylpermaleinat, tert.-Butylperacetat, Percarbonate wie Dicyclohexyl- und Diisopropylpercarbonat, Dialkylperoxide wie Di-tert.-Butylperoxid, Dicumylperoxid, Hydroperoxide wie tert.-Butyl- oder Cumolhydroperoxide, Isophthal-monopersäure oder Acetylcyclohexansulfonylperoxid.

Auch ist die Verwendung von in situ hergestellten Peroxiden und Radikalstartern ebenfalls möglich. In Frage kommende Reaktionen sind beispielsweise die Umsetzung von Phosgen, Chlorameisensäureestern, Säurehalogeniden, Isocyanaten oder Diisocyanaten mit Wasserstoffperoxid oder Hydroperoxiden.

Als wasserlösliche Initiatoren werden Wasserstoffperoxid und die Alkali- oder Erdalkalisalze von Persäuren oder Peroxosäuren verwendet. Bevorzugt eingesetzt werden Ammonium- und Kaliumperoxidisulfat. Wasserlösliche Initiatoren werden bei der Polymerisation in heterogener oder homogener wäßriger Phase eingesetzt.

Weiter kann die Polymerisation auch mit Hilfe von Redoxsystemen gestartet werden. In diesem Fall sind Kombinationen aus Wasserstoffperoxid und Reduktionsmitteln wie beispielsweise Ascorbinsäure und Schwermetallsalzen wie Eisen- oder Kupfersalzen neben Kombinationen aus Kalium- oder Ammoniumperoxidisulfat mit Alkalimetallpyrosulfid einzusetzen.

Zur Erzielung besonderer Effekte kann das Initiierungssystem weitgehend variiert werden. Hingewiesen sei auf Initiatoren und Redoxsysteme, wie sie in Houben – Weyl, Methoden der Organischen Chemie, 1961, Band XIV/1, beschrieben sind.

Bei Durchführung des erfindungsgemäßen Verfahrens in wäßriger Suspension werden zur Gewinnung einwandfreier Perlpolymerisate Dispergatoren benötigt. Als Dispergatoren seien beispielhaft genannt: Polyvinylalkohol, teilverseifte Polyvinylacetate, Polyvinylpyrrolidon, Cellulose- oder Stärkederivate, wie z. B. Methyl-, Ethyl- oder Ethylhydroxycellulosen. Als synthetische

Dispergatoren (Copolymerisate von hydrophilen und hydrophoben Monomeren) seien beispielhaft genannt: Styrol-Acrylsäure-, Styrol-Maleinanhydrid-, Ethylen-Acrylsäure-, Ethylen-Maleinanhydrid-, Acrylsäureester-Acrylsäure-, (Meth)Acrylsäurederivate-, (Meth)Acrylsäure-Copolymerisate, Polyethylenoxide oder Ethylen-Propylenoxidcopolymerisate, Polyester mit OH-Zahlen zwischen 10 und 250.

Ferner können auch feinteilige wasserunlösliche anorganische Substanzen als Dispergatoren verwendet werden. Als Beispiele seien angeführt: Carbonate, Phosphate, Sulfate und Silicate der Erdalkalimetalle, des weiteren Aluminiumoxid, Aluminiumhydroxid sowie Bentonit und Talkum.

Das Gewichtsverhältnis Wasserphase zu Monomerphase sollte im Bereich von 8 : 1 bis 1 : 1, vorzugsweise 3 : 1 bis 1 : 1 liegen.

Ein besonderer Vorteil der Suspensionspolymerisation liegt in der einfachen Aufarbeitung und problemlosen Trocknung des erhaltenen Perlpolymerisates.

Bei Durchführung des erfindungsgemäßen Verfahrens in einem der üblichen organischen Lösungsmittel wird die Polymerisation in einer homogenen Phase aus den Monomeren, dem gewählten Initiatorsystem, dem Lösungsmittel und dem Enolether begonnen. Ist das Lösungsmittel kein Lösungsmittel für das gebildete Polymerisat, wird die Polymerisation als Fällungs- oder Suspensionspolymerisation zu Ende geführt. Als organische Lösungsmittel eignen sich gesättigte aliphatische oder aromatische Kohlenwasserstoffe, substituierte Aromaten wie Toluol oder Chlorbenzol, halogenierte aliphatische Kohlenwasserstoffe wie Methylenchlorid, Tetrachlorkohlenstoff, Trichlorethylen, Tetrachlorethylen oder Trichlorfluormethan oder andere aliphatische Fluorchlorkohlenwasserstoffe oder Fluorkohlenwasserstoffe, niedrigsiedende Alkohole wie Methanol, Ethanol, Propanol, Isopropanol, isomere Butanole, vorzugsweise tert.-Butanol, ferner Dimethylformamid oder Dimethylacetamid.

Das erfindungsgemäße Verfahren kann auch als Emulsionspolymerisation durchgeführt werden.

Als Emulgatoren können die Alkalisalze modifizierter Harzsäuren, wie beispielsweise das Natriumsalz von hydrierter Abietinsäure mit Erfolg, aber auch Alkylsulfate und -sulfonate mit 12 bis 24 C-Atomen im Alkylrest verwendet werden. Bevorzugt werden biologisch abbaubare Emulgatoren verwendet. Die Emulgatoren werden in einer Konzentration von 0,05 bis 20 Gew.-%, bevorzugt mit 0,5 bis 3 Gew.-%, bezogen auf die wäßrige Phase, eingesetzt. Selbstverständlich können diese Emulgatoren mit den vorgenannten Dispergatoren beliebig kombiniert werden.

Wird die Isolierung des Polymerisats gewünscht, kann dies durch Fällung aus der Emulsion nach bekannten Methoden oder beispielsweise durch Sprühtrocknung erfolgen.

Die Copolymerisation kann ferner mit und ohne Lösungsmittel in Polymerisationsvorrichtungen, wie z. B. Schneckenmaschinen, Knetern oder speziellen Rühraggregaten, erfolgen. Das Abdampfen der Lösungsmittel und Restmonomeren aus den Polymerisationsansätzen erfolgt in Verdampfungsschnecken, Dünnschichtverdampfern, Schlangenrohrverdampfern oder Sprühtrocknern. Den Polymerisationsansätzen können weiterhin übliche Hilfsmittel wie Kettenübertrager für Telomerisation, weitere Molekulargewichtsregler, falls sie zusätzlich neben den Enolethern gewünscht werden, Stabilisatoren, Gleitmittel, Antistatika und Antioxidantien hinzugefügt werden.

Die nach dem erfindungsgemäßen Verfahren hergestellten Polymerisate können u. a. zur Herstellung von Spritzgußartikeln verwendet werden. Die Polymerisate sind besonders geeignet für den Einsatz im Dentalbereich, beispielsweise zur Herstellung von Prothesen nach dem Pulver-Flüssigkeitsverfahren.

## Beispiele 1 – 12
## (Suspensionspolymerisationen)

### Allgemeine Arbeitsvorschrift

Reaktionsgefäß:
3-l-Planschliffbecher mit Blattrührer, Rückflußkühler, Innenthermometer, Gaseinlaß- und Gasauslaßrohr.

Lösung 1:
wäßrige Phase

| | |
|---|---|
| 1000 ml | dest. Wasser |
| 10 g | Polyvinylpyrrolidon |

Lösung 2:

| | |
|---|---|
| 300 g | Monomer |
| 3 g | Benzoylperoxid (75%ig) |
| 0,03 – 3 g | Enolether als Regler |

Lösung 1 und Lösung 2 werden unter Ausschluß von Luftsauerstoff in das Reaktionsgefäß gegeben und 30 Minuten lang mit 600 UpM gerührt. Man erhitzt die gebildete Suspension unter weiterem

Rühren auf 76° C und kühlt bei einsetzender exothermer Reaktion so stark, daß die Innentemperatur zwischen 76 und 80° C gehalten wird. Nach dem Abklingen der Reaktion wird 4 Stunden lang bei 80° C nachgerührt. Das gebildete Perlpolymerisat wird durch Filtration abgetrennt, mehrfach mit destilliertem Wasser gewaschen und bei 80° C getrocknet. Die Grenzviskositäten [$\eta$] werden bei 25° C in Chloroform bestimmt.

Siebanalyse (Beispiel 4):

| | | |
|---|---|---|
| > 200 µ | 0,50% | mittlere Korngröße: 88 µ |
| 100 – 200 µ | 34,04% | |
| 80 – 100 µ | 25,10% | |
| 63 – 80 µ | 15,06% | |
| 40 – 63 µ | 14,26% | |
| 0 – 40 µ | 11,02% | |

Tabelle 6

| Beispiel lfd. Nr. | Monomer | Regler | Reglermenge [%] | [η] [a]) |
|---|---|---|---|---|
| 1 | Methylmethacrylat (MMA) | – | – | 2,88 |
| 2 | MMA | 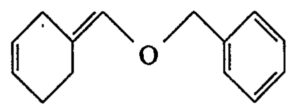 | 0,01 | 2,35 |
| 3 | MMA | 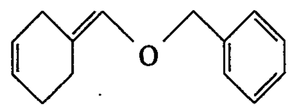 | 0,05 | 1,94 |
| 4 | MMA | 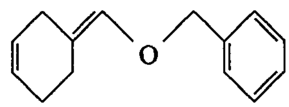 | 0,1 | 1,80 |
| 5 | MMA | 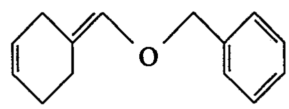 | 0,2 | 1,38 |
| 6 | MMA | 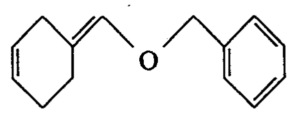 | 0,5 | 0,89 |
| 7 | MMA | 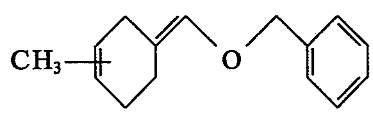 | 0,05 | 2,10 |
| 8 | MMA | 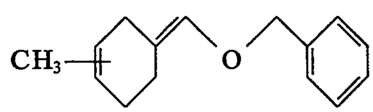 | 0,10 | 1,97 |
| 9 | MMA | 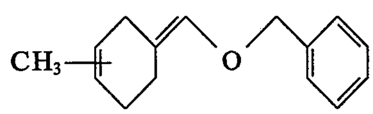 | 0,50 | 1,05 |
| 10 | MMA | 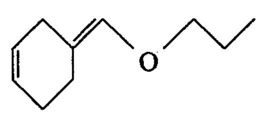 | 0,10 | 1,57 |
| 11 | 75% MMA 25% Ethylacrylat | – | – | 2,4 |
| 12 | 75% MMA 25% Ethylacrylat | 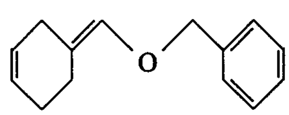 | 0,1 | 1,4 |

[a]) Grenzviskosität des Polymeren.

## Beispiele 13–19
## (Emulsionspolymerisation)

### Allgemeine Arbeitsvorschrift

Reaktionsgefäß:
3-l-Planschliffbecher mit Blattrührer, Rückflußkühler, Innenthermometer, Gaseinlaß- und Gasauslaßrohr.

Lösung 1:
wäßrige Phase

| | |
|---|---|
| 900 ml | dest. Wasser |
| 15 g | Natriumalkylsulfonat |
| 0,6 g | Kaliumperoxidisulfat |

Lösung 2:

| | |
|---|---|
| 300 g | Methacrylsäuremethylester |
| 0,03–3 g | Enolether als Regler |

Lösung 1 und Lösung 2 werden unter Ausschluß von Luftsauerstoff in das Reaktionsgefäß gegeben und 10 Minuten lang mit 500 UpM gerührt. Man erhitzt unter weiterem Rühren auf 80° C. Die Reaktion setzt alsbald unter Ausbildung eines Latex ein und ist praktisch zu Ende, wenn nach ca. 10 Minuten im Kühler der Rücklauf des azeotropen Gemisches aus monomerem Methacrylsäuremethylester und Wasser aufhört. Es wird noch 2 Stunden bei 90° C nachgerührt. Man erhält in nahezu 100%iger Ausbeute einen Latex von Polymethacrylsäuremethylester. Das Polymethacrylat wird mit Magnesiumsulfat gefällt, filtriert, mit dest. Wasser gewaschen und bei 80° C getrocknet. Die Grenzviskositäten [$\eta$] werden in Chloroform bei 25° C bestimmt.

Tabelle 7

| Beispiel lfd. Nr. | Regler | Reglermenge [%] | [$\eta$] |
|---|---|---|---|
| 13 | – | – | 4,45 |
| 14 | 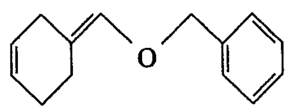 | 0,05 | 3,25 |
| 15 | 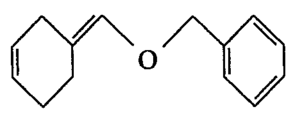 | 0,1 | 2,70 |
| 16 | 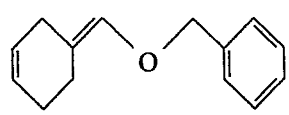 | 0,2 | 1,90 |
| 17 | 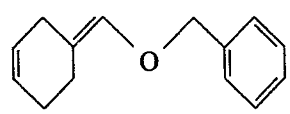 | 0,5 | 1,12 |
| 18 | 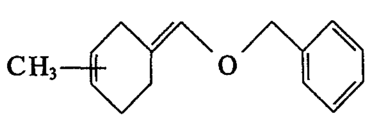 | 0,5 | 1,27 |
| 19 | 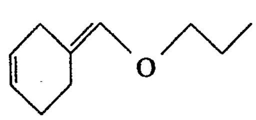 | 0,5 | 0,80 |

**Patentansprüche**

1. Verfahren zur Polymerisation von Methacrylsäuremethylester oder dessen Gemischen mit bis zu 25 Gew.-%, bezogen auf Gesamtmonomere, an mit Methacrylsäuremethylester copolymerisierbaren Vinylmonomeren, dadurch gekennzeichnet, daß die Polymerisation in Gegenwart von 0,01–10 Gew.-%, bezogen auf Gesamtmonomere, eines oder mehrerer Enolether, die sich von aliphatischen oder cycloaliphatischen Aldehyden oder Ketonen ableiten, durchgeführt wird.

2. Verfahren nach Anspruch 1, dadurch gekennzeichnet, daß 0,05–1 Gew.-% Enolether, bezogen auf Gesamtmonomere, eingesetzt werden.

3. Verfahren nach Anspruch 1 oder 2, dadurch gekennzeichnet, daß Enolether der Formeln 1–5 eingesetzt werden

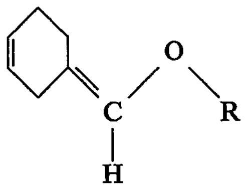

(1)

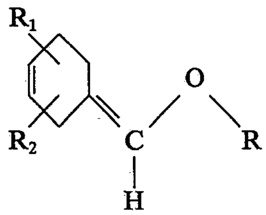

(2)

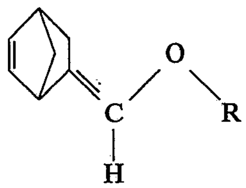

(3)

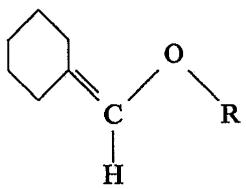

(4)

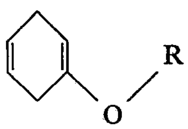

(5)

in denen $R_1$ und $R_2$ gleich oder verschieden sind und Wasserstoff oder einen $C_1-C_3$-Alkylrest bedeuten und R ein $C_1-C_{20}$-Alkyl-, $C_5-C_{10}$-Cycloalkyl- oder $C_7-C_{20}$-Aralkylrest ist.

4. Verfahren nach Anspruch 1 oder 2, dadurch gekennzeichnet, daß ein Enolether der Formel 6 eingesetzt wird

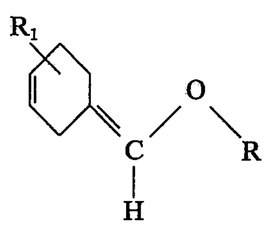

in der $R_1 = H$ oder $CH_3$ und $R = C_1-C_{10}$-Alkyl, $C_5-C_{10}$-Cycloalkyl oder Benzyl ist.

5. Verfahren nach Anspruch 1 oder 2, dadurch gekennzeichnet, daß als copolymerisierbare Vinylmonomere $C_2-C_{20}$-Alkylester der Methacrylsäure, $C_1-C_{20}$-Alkylester der Acrylsäure, Styrol,

$C_1-C_4$-alkylsubstituierte Styrole, Acrylnitril, Methacrylnitril oder deren Gemische eingesetzt werden.

6. Verfahren nach Anspruch 5, dadurch gekennzeichnet, daß als Vinylmonomere $C_2-C_{15}$-Alkylester der Methacrylsäure, $C_1-C_8$-Alkylester der Acrylsäure oder deren Gemische eingesetzt werden.

7. Verfahren nach Anspruch 1 oder 2, dadurch gekennzeichnet, daß die Polymerisation in Emulsion oder Suspension durchgeführt wird.

8. Homo- oder Copolymerisate von Methacrylsäuremethylester, hergestellt nach einem Verfahren gemäß Anspruch 1 oder 2.

## Claims

1. Process for the polymerisation of methyl methacrylate or mixtures thereof with up to 25% by weight, based on total monomer, of vinyl monomers which are copolymerisable with methyl methacrylate, characterised in that polymerisation is carried out in the presence of 0.01 – 10% by weight, based on total monomer, of one or more enol ethers which are derived from aliphatic or cycloaliphatic aldehydes or ketones.

2. Process according to Claim 1, characterised in that 0.05 – 1% by weight of enol ether, based on total monomer, is used.

3. Process according to Claim 1 or 2, characterised in that enol ethers of the formulae 1 – 5 are used

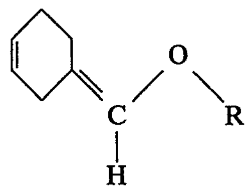

(1)

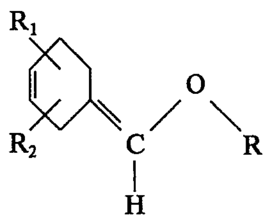

(2)

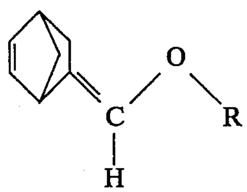

(3)

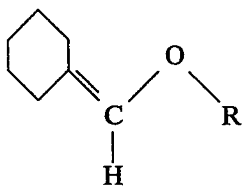

(4)

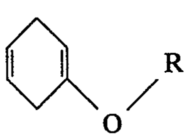

(5)

in which

$R_1$ and $R_2$ are identical or different and denote hydrogen or a $C_1-C_5$-alkyl radical and

R is a $C_1-C_{20}$-alkyl, $C_5-C_{10}$-cycloalkyl or $C_7-C_{20}$-aralkyl radical.

4. Process according to Claim 1 or 2, characterised in that an enol ether of the formula 6 is used

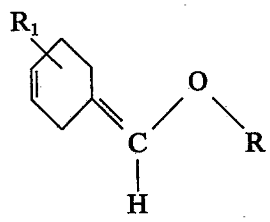

in which
$R_1 = H$ or $CH_3$ and
$R = C_1-C_{10}$-alkyl, $C_5-C_{10}$-cycloalkyl or benzyl.

5. Process according to Claim 1 or 2, characterised in that $C_2-C_{20}$-alkyl esters of methacrylic acid, $C_1-C_{20}$-alkyl esters of acrylic acid, styrene, $C_1-C_4$-alkyl-substituted styrenes, acrylonitrile, methacrylnitrile or mixtures thereof are used as the copolymerisable vinyl monomers.

6. Process according to Claim 5, characterised in that $C_2-C_{15}$-alkyl esters of methacrylic acid, $C_1-C_8$-alkyl esters of acrylic acid or mixtures are used as the vinyl monomers.

7. Process according to Claim 1 or 2, characterised in that polymerisation is carried out in emulsion or suspension.

8. Homopolymers or copolymers of methyl methacrylate produced by a process according to Claim 1 or 2.

## Revendications

1. Procédé de polymérisation du méthacrylate de méthyle ou de ses mélanges avec des proportions allant jusqu'à 25% en poids, par rapport aux monomères totaux, de monomères vinyliques copolymérisables avec le méthacrylate de méthyle, caractérisé en ce que l'on effectue la polymérisation en présence de 0,01 à 10% en poids, par rapport aux monomères totaux, d'un ou plusieurs éthers d'énols dérivant d'aldéhydes ou cétones aliphatiques ou cycloaliphatiques.

2. Procédé selon la revendication 1, caractérisé en ce que l'on utilise de 0,05 à 1% en poids d'éther d'énol par rapport aux monomères totaux.

3. Procédé selon la revendication 1 ou 2, caractérisé en ce que l'on utilise les éthers d'énols de formules 1 à 5

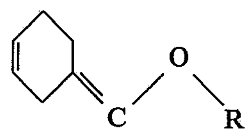

(1)

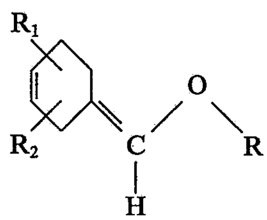

(2)

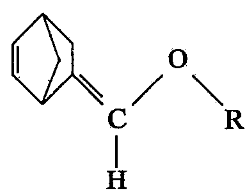

(3)

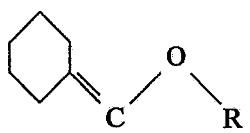

(4)

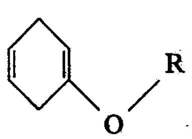

(5)

dans lesquelles $R_1$ et $R_2$, identiques ou différents, représentent l'hydrogène ou un groupe alkyle en $C_1-C_5$ et R représente un groupe alkyle en $C_1-C_{20}$, cycloalkyle en $C_5-C_{10}$ ou aralkyle en $C_7-C_{20}$.

4. Procédé selon la revendication 1 ou 2, caractérisé en ce que l'on utilise un éther d'énol de formule 6

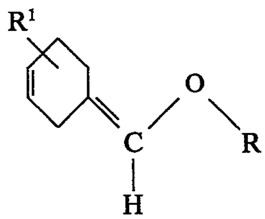

dans laquelle $R_1 = H$ ou $CH_3$ et R = alkyle en $C_1-C_{10}$, cycloalkyle en $C_5-C_{10}$ ou benzyle.

5. Procédé selon la revendication 1 ou 2, caractérisé en ce que l'on utilise en tant que monomères vinyliques copolymérisables des esters alkyliques en $C_2-C_{20}$ de l'acide méthacrylique, des esters alkyliques en $C_1-C_{20}$ de l'acide acrylique, du styrène, des styrènes substitués par des groupes alkyle en $C_1-C_4$, de l'acrylonitrile, du méthacrylonitrile ou leurs mélanges.

6. Procédé selon la revendication 5, caractérisé en ce que l'on utilise en tant que monomères vinyliques des esters alkyliques en $C_2-C_{15}$ de l'acide méthacrylique, des esters alkyliques en $C_1-C_8$ de l'acide acrylique ou leurs mélanges.

7. Procédé selon la revendication 1 ou 2, caractérisé en ce que l'on effectue la polymérisation en émulsion ou en suspension.

8. Homo- ou copolymères du méthacrylate de méthyle, préparés par un procédé selon la revendication 1 ou 2.